# FASCICULE DE BREVET EUROPEEN

(11) **EP 3 710 309 B1**
(45) Date de publication et mention de la délivrance du brevet: **13.04.2022**
(21) Numéro de dépôt: 18793258.7
(22) Date de dépôt: 08.10.2018
(51) Int. Cl.: B60P 7/08, F16B 35/06, F16B 37/14, F16B 45/00, F16B 21/14

(54) **DISPOSITIF POUR SECURISER UN ARRIMAGE.**
VORRICHTUNG ZUR SICHERUNG EINER VERZURRUNG
DEVICE FOR SECURING A TIE DOWN

(30) Priorité: 30.10.2017 FR 1760246
(43) Date de publication de la demande: 23.09.2020
(73) Titulaire: Societe d'Applications Electriques et Mecaniques SAPEM, 58270 Cizely (FR)
(72) Inventeur: ARCHER, Joël, 58110 Rouy (FR); PINCONNEAU, Yoann, 33520 Bruges (FR)
(74) Mandataire: Mazabraud, Xavier
(86) Numéro de dépôt international: PCT/FR2018/052468
(87) Numéro de publication internationale: WO 2019/086777

(56) Documents cités:
- WO-A1-2016/140673
- AT-B- 412 269
- FR-E- 76 488
- US-A- 3 628 820
- US-A1- 2011 296 668

## Description

L'invention se situe dans le domaine de l'arrimage d'une charge lors de son transport ; plus particulièrement l'invention se rapporte à des moyens pour assurer la sécurisation de la vis - ou axe - d'un pontet d'arrimage contre le desserrage dû aux vibrations lors du transport.

Lorsque l'on transporte une charge, notamment par voie aérienne ou maritime, on la fixe au véhicule de transport. Généralement on utilise un pontet d'arrimage fixé au véhicule ou à la charge, auquel on vient fixer un agrès d'arrimage ; cet agrès peut notamment être un câble ou une chaîne. Un tel pontet d'arrimage est connu par exemple du AT 412 269 B et du US 3 628 820 A.

Lors de l'utilisation de pontets d'arrimage vissés, il est nécessaire d'assurer la sécurisation contre le desserrage de la vis à cause des vibrations. Lorsque le pontet doit être démonté après chaque utilisation, il n'est pas possible d'utiliser du frein-filet pour sécuriser la vis ; cette solution est employée dans les cas où le pontet d'arrimage reste en place de manière permanente sur un véhicule.

Dans le cas où la vis d'arrimage traverse la structure de la charge à arrimer, c'est-à-dire que la vis passe à travers un trou débouchant, il est alors possible de sécuriser la vis par son extrémité ; par exemple à l'aide d'un contre écrou ou d'une goupille. Dans le cas où la vis n'est pas traversante, c'est-à-dire qu'elle vient se visser dans un trou fileté non débouchant, ou si l'espace disponible à l'extrémité de la vis est trop restreint ou inaccessible, il n'est pas possible d'utiliser cette méthode.

Le but de l'invention est de proposer des moyens ou un dispositif pour garantir la fixation d'un pontet d'arrimage à la structure qui le porte.

Selon l'invention, un pontet d'arrimage, comprend les caractéristiques de la revendication 1.

Ainsi, un pontet d'arrimage selon l'invention comprend :
- la vis pour visser le pontet dans une structure à arrimer ;
- un anneau pour y passer l'agrès d'arrimage ;
- un étrier pour relier cet anneau et cette vis entre eux ; et,
- une bride qui comprend des moyens pour bloquer, de façon amovible, la vis en rotation relativement à l'anneau.

Les moyens de blocage de la bride peuvent comprendre des moyens de prise de la, bride sur la tête de la vis. Notamment si la vis est une vis à pan, de préférence une vis à tête hexagonale, les moyens de prise de la bride sur la tête de vis peuvent comprendre une couronne d'arrêt, de préférence polylobée, prévue pour venir en prise avec les pans de la tête.

Les moyens de blocage de la bride comprennent avantageusement des butées prévues pour venir en prise rotative de part et d'autre de l'étrier.

De préférence, le pontet comprend en outre des moyens pour maintenir la bride en prise axiale sur la vis. Ces moyens de maintien de la bride en prise axiale peuvent comprendre une extension prévue pour s'étendre axialement au-delà de la bride depuis la tête de vis et une goupille prévue pour venir transversalement en prise avec cette extension.

Des modes de réalisation et des variantes seront décrits ci-après, à titre d'exemples non limitatifs, avec référence aux dessins annexés dans lesquels :
- la figure 1 est une vue en perspective, de trois quart avant et de dessus, d'un pontet équipé d'une bride d'arrêt selon l'invention ;
- la figure 2 est une vue en perspective, de trois quart avant et de dessus, de la bride d'arrêt de la figure 1 ;
- la figure 3 est une vue en perspective, de trois quart avant et de dessous, de la bride d'arrêt de la figure 1 ;
- la figure 4 est une vue éclatée du pontet de la figure 1 ;

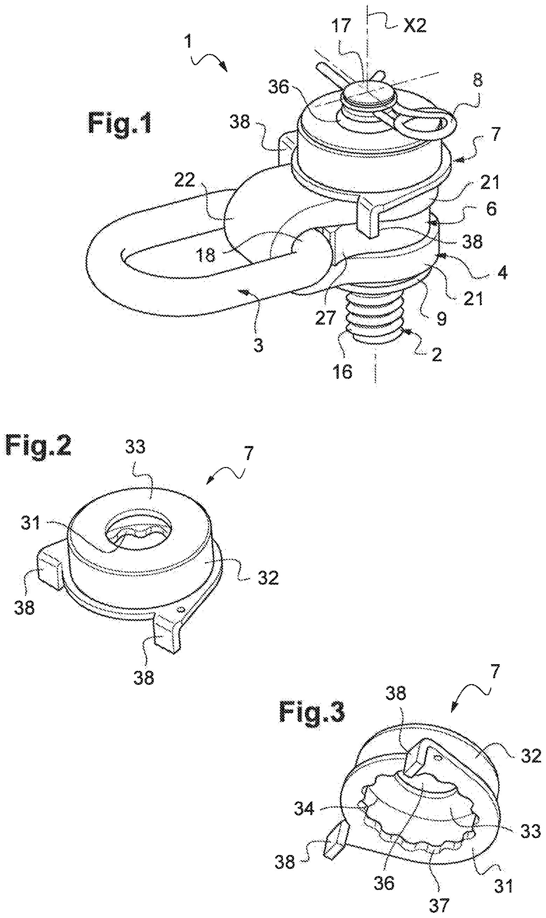

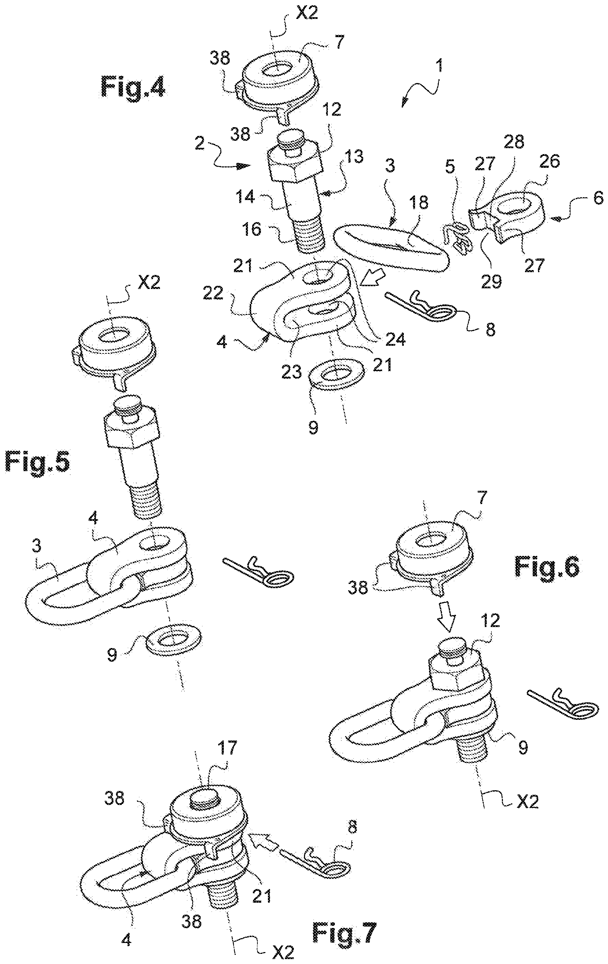

- les figures 4 à 7 sont des vues en perspectives qui illustrent différentes étapes du montage du pontet de la figure 1 ;

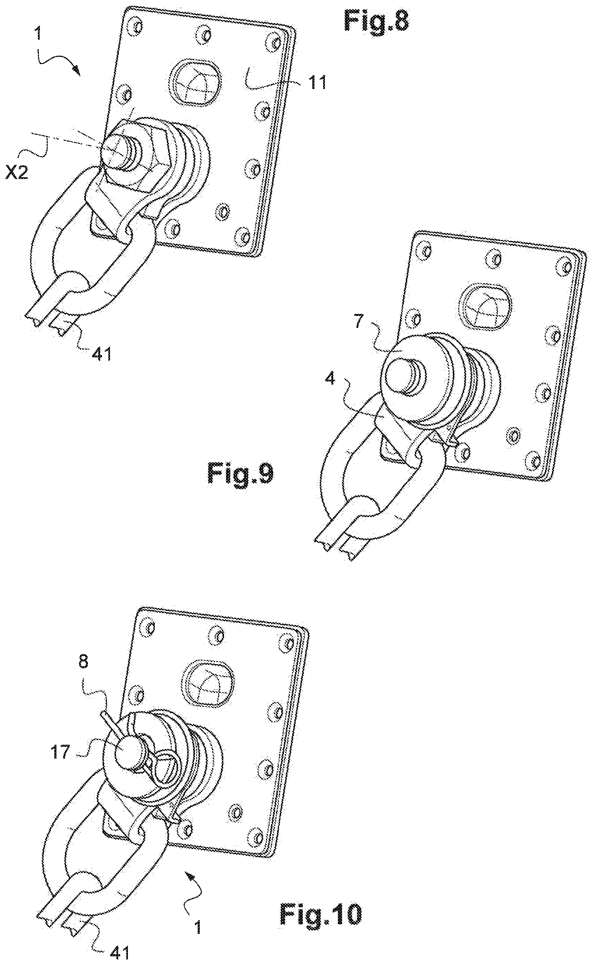

- les figures 8 à 9 sont des vues en perspectives qui illustrent différentes étapes de la fixation du pontet de la figure 1 sur la structure d'une charge à transporter.

La figure 1 illustre un pontet d'arrimage 1 selon l'invention, dans une configuration monté. Un vue éclatée de ce même pontet est représentée à la figure 4. Un tel pontet est notamment prévu pour arrimer une charge lorsqu'elle doit être transportée, par exemple par voie maritime ou par voie aérienne.

Le pontet comprend :
- une vis 2;
- un anneau 3;
- un étrier 4 ;
- un ressort 5, uniquement visible à la figure 4 ;
- une entretoise 6 ;
- une bride 7 ; et,
- une goupille 8, de type béta dans l'exemple illustré.

Les figures représentent en outre une rondelle 9, faite pour assurer une interface entre le pontet 1 et une structure 11 (voir figures 8-10) à laquelle il est prévu d'être fixé.

La vis 2 s'étend selon un axe principal X2. Ce qui est dit axial dans la présente description est ce qui s'étend selon cet axe X2; ce qui est dit transversal est ce qui s'étend perpendiculairement à cet axe. Les termes dessus/dessous; avant/arrière sont définis en fonction de la position du pontet à la figure 1.

La vis 2 comprend:
- une tête 12 ; dans l'exemple illustré la tête est du type hexagonale ;
- une tige 13 s'étendant axialement depuis la tête 12 (vers le bas) et comprenant d'abord une partie lisse 14 puis une partie filetée 16, de diamètre réduit par rapport à la partie lisse ; et,
- une extension 17 s'étendant axialement depuis la tête 12 (vers le haut) dans une direction opposée à celle de la tige 13.

L'extension 17 est conformée pour recevoir la goupille, de sorte que la goupille s'étend transversalement à l'axe X2. Dans le cas d'espèce, l'extension comprend un tour traversant transversal, pour y introduire la partie droite de la goupille et une gorge périphérique pour y encliqueter la partie courbe de la même goupille, de façon à la sécuriser sur la vis.

L'anneau 3 comprend une partie droite prévue pour venir en prise avec l'étrier 4. L'étrier 4 comprend deux flasques 21 reliés entre eux par un raccord 22 hémicylindrique. Les flasques s'étendent transversalement à l'axe X2 et forment, avec le raccord 22, une gorge 23. Les flasques comprennent chacun un trou traversant 24 pour le passage de la tige 13. Les trous sont axialement alignés entre eux et sont prévus pour former une liaison de type pivot glissant avec la partie lisse 14 de la tige 13.

L'entretoise 6 est prévue pour être introduite de façon ajustée entre les flasques 21. Elle est de forme sensiblement annulaire et comprend un trou traversant 26 prévu pour former, avec les trous 24 des flasque un passage pour la tige 13. L'entretoise comprend, à l'avant, deux extensions 27, de part et d'autre d'une zone plane 28. Les extensions et la zone plane formant, entre les flasques 21, un logement 29 pour le ressort 5.

Comme illustré à la figure 4, pour l'assemblage du pontet 1, on introduit d'abord la partie droite 18 de l'anneau au fond de la gorge 23. On introduit ensuite l'entretoise 6 et le ressort 5, entre les flasques jusqu'à ce que le trou 26 de l'entretoise soit sensiblement aligné avec les trous 24 des flasques. Dans cette position le ressort 5 maintient la partie droite de l'anneau plaquée au fond de la gorge 23, contre le raccord hémicylindrique 22, de sorte que le raccord et la partie droite forment ensemble une liaison pivot pour l'anneau.

Comme illustré à la figure 5, on introduit ensuite la tige 13 dans le passage formé par les trous 24, 26, de sorte que l'anneau, rétrier, l'entretoise et le ressort sont maintenus ensemble. Le pontet a alors la configuration des figures 6 et 8.

Comme illustré à la figure 8, le pontet 1 peut être vissé sur la structure 11 à amarrer, après adjonction de la rondelle 9. Dans l'exemple illustré, la structure 11 est représentée par une plaque d'amarrage 11 taraudée, prévue pour y viser la partie filetée 16 de la tige 13 de la vis 2.

La bride 7 est particulièrement illustrée aux figures 2 et 3. Elle est prévue pour coopérer avec les autres éléments de façon à empêcher la vis de se dévisser sous l'effet de vibrations, notamment durant le transport de la charge, représentée par la plaque 11 aux figures 8 à 10. Dans ce but, dans l'exemple illustré, la bride 7 comprend :
- une couronne d'arrêt 31 prévue pour venir en prise avec les pans de la tête de vis 12 ;
- une paroi périphérique 32 s'étendant vers le haut depuis la couronne 31 ; et,
- une paroi sommitale 33 qui s'étend transversalement depuis un bord supérieur 34 de la paroi périphérique.

La paroi périphérique 32 et la paroi sommitale 33 forment ensemble un logement pour la tête de vis 12. Un trou 36 est formé axialement dans la paroi sommitale pour y permettre le passage de l'extension 17. Dans l'exemple illustré, la couronne 31 est prévue pour venir en appui sur le flasque supérieur de l'étrier tout en garantissant que la goupille 8 peut venir en prise avec l'extension 17.

Dans l'exemple illustré, la couronne 31 comprend un bord intérieur 37 prévu pour former une prise pour la bride sur la tête de vis. Afin de faciliter la mise en prise, le bord est polylobé. Dans l'exemple illustré, le bord intérieur 37 comprend douze lobes prévus pour venir en prise avec l'hexagone formé par les six côtés de la tête de vis hexagonale 12.

La bride comprend en outre deux butées 38. Ces butées sont formées vers l'avant dans le prolongement tangentiel de la couronne 31, dont l'extrémité libre est repliée vers le bas. Elles sont disposées de sorte que dans la position d'usage illustrée aux figures 1, 7 et 10, les butées sont disposées de part et d'autre du flasque 21 supérieur de l'étrier 4. Ainsi disposées les butées bloquent la rotation de la bride 7 relativement à l'étrier 4.

On va maintenant décrire la mise en œuvre du pontet selon l'invention, en référence aux figures 8 à 10.

Comme illustré à la figure 8, une fois le pontet assemblé selon ce qui est décrit aux figures 4 et 5, c'est-à-dire lorsque l'anneau 3, l'étrier 4, le ressort 5 et l'entretoise 6 sont assemblés sur la vis 2, l'ensemble 2-6 est vissé dans la plaque 11. Un agrès d'arrimage est ensuite passé dans l'anneau 3 ; dans l'exemple illustré l'agrès est un câble 41. Le câble étant convenablement tendu dans sa position d'arrimage, il immobilise de fait l'anneau 3 et l'étrier 4 en rotation autour de l'axe X2. Seule la vis 2 est susceptible de se dévisser, notamment sous l'effet de vibrations.

Comme illustré à la figure 9, on pose ensuite la bride 7 sur la tête 12 de la vis 2, de sorte qu'elle immobilise la vis en rotation relativement à l'étrier.

Comme illustré à la figure 10, on introduit ensuite la goupille 8 dans l'extension 17 de la vis. La goupille béta étant insensible aux vibrations, elle maintient la bride en prise avec la tête de vis 12 et l'étrier.

Ainsi, dans la configuration de la figure 10, le pontet 1 selon l'invention est indémontable, même sous l'effet des vibrations. Il est maintenu en position sur la plaque 11 par le câble 41 tendu dans sa position d'arrimage. En effet :
- la tension du câble 41 maintient l'anneau 3 et l'étrier 4 en position ;
- l'étrier maintient la bride 7 en position ; et,
- la bride maintient la vis 2 en position.

Bien sûr, l'invention n'est pas limitée aux modes de réalisation préférés qui viennent d'être décrits mais, au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, la bride et la tête de vis peuvent avoir des formes coopérantes différentes. Par exemple, la tête de la vis peut être carrée.

Plus généralement, il est possible de prévoir tout type de dispositif qui, au moins indirectement, immobilise la vis en rotation, par rapport à une direction donnée par l'agrès d'arrimage. En effet, l'agrès d'arrimage, une fois dans sa position d'arrimage représente au moins une direction fixe dans l'espace. C'est notamment le cas lorsque l'agrès d'arrimage est tendu. Une solution pourrait être une bride dont les butées viennent de part et d'autre du câble.

## Revendications

1. Pontet d'arrimage (1), destiné à être fixé à une structure (11) à arrimer, notamment à une structure d'une charge à transporter, le pontet d'arrimage (1) comprenant:
- une vis (2) pour visser ledit pontet dans ladite structure (11) à arrimer ;
- un anneau (3) pour y passer un agrès d'arrimage (41) ;
- un étrier (4) pour relier ledit anneau et ladite vis entre eux le pontet d'arrimage étant **caractérisé en ce qu'**il comprend en outre :
- une bride (7) qui comprend des moyens (37, 38) pour bloquer, de façon amovible, ladite vis en rotation relativement audit anneau.

2. Pontet selon la revendication 1, **caractérisé en ce que** les moyens de blocage (37, 38) de la bride comprennent des moyens de prise (37) de la bride sur la tête (12) de la vis.

3. Pontet selon la revendication 2, **caractérisé en ce que** la vis est une vis à pan, de préférence une vis à tête (12) hexagonale, les moyens de prise (37) de la bride sur la tête de vis (12) comprenant une couronne (31) d'arrêt, de préférence polylobée, prévue pour venir en prise avec les pans de ladite tête (12).

4. Pontet selon l'une des revendications 1 à 3, **caractérisé en ce que** les moyens de blocage (37, 38) de la bride (7) comprennent des butées (38) prévues pour venir en prise rotative de part et d'autre de l'étrier (4).

5. Pontet selon l'une des revendications 1 à 4, **caractérisé en ce qu'**il comprend en outre des moyens (9, 17) pour maintenir la bride (7) en prise axiale sur la vis.

6. Pontet selon la revendication 5, **caractérisé en ce que** les moyens de maintien (9, 17) de la bride en prise axiale, comprennent une extension (17) prévue pour s'étendre axialement au-delà de la bride depuis la tête de vis (12) et une goupille (8) prévue pour venir transversalement en prise amovible avec ladite extension.

## Patentansprüche

1. Zurranker (1) zur Befestigung an einer zu verzurrenden Konstruktion (11), insbesondere an einer Konstruktion einer zu transportierenden Last, wobei der Zurranker (1) umfasst:
- einen Bolzen (2) zum Einschrauben des Zurrankers in die zu verzurrende Konstruktion (11);
- eine Öse (3) zum Durchführen eines Zurrseils (41);
- einen Bügel (4), zur Verbindung der Öse und der Schraube miteinander;
wobei der Zurranker **dadurch gekennzeichnet ist, dass** dieser ferner umfasst:
- einen Flansch (7), der Mittel (37, 38) zum lösbaren Blockieren des Bolzens gegen Drehung relativ zur Öse umfasst.

2. Zurranker nach Anspruch 1, **dadurch gekennzeichnet, dass** die Mittel (37, 38) zum Blockieren des Flansches Mittel (37) zum Greifen des Flansches an dem Bolzenkopf (12) umfassen.

3. Zurranker nach Anspruch 2, **dadurch gekennzeichnet, dass** der Bolzen ein Kantbolzen ist, vorzugsweis ein Sechskantkopfbolzen (12) ist, wobei die Mittel (37) zum Greifen des Flansches am Bolzenkopf (12) einen vorzugsweise mehrlappigen Sperrkranz (31) umfassen, der für den Eingriff mit den Kanten des Kopfes (12) vorgesehen ist.

4. Zurranker nach einem der Ansprüche 1 bis 3, **dadurch gekennzeichnet, dass** die Mittel (37, 38) zum Blockieren des Flansches (7) Anschläge (38) umfassen, die für den drehbaren Eingriff auf beiden Seiten des Bügels (4) vorgesehen sind.

5. Zurranker nach einem der Ansprüche 1 bis 4, **dadurch gekennzeichnet, dass** dieser ferner Mittel (9, 17) zum Halten des Flansches (7) in axialem Eingriff mit dem Bolzen umfasst.

6. Zurranker nach Anspruch 5, **dadurch gekennzeichnet, dass** die Mittel (9, 17) zum Halten des Flansches in axialem Eingriff eine Verlängerung (17) aufweisen, die vorgesehen ist für eine axiale Erstreckung von dem Bolzenkopf (12) über den Flansch hinaus, und einen Sicherungsstift (8) umfassen, der vorgesehen ist für den lösbaren transversalen Eingriff mit der Verlängerung.

## Claims

1. A securing bridge (1), intended to be fastened to a structure (11) to be secured, in particular to a structure of a load to be transported, the securing bridge (1) comprising:
- a screw (2) for screwing said bridge into said structure (11) to be secured;
- a ring (3) to pass a securing tackle (41) therethrough;
- a bracket (4) for connecting said ring and said screw to each other, the securing bridge being **characterised in that** it further comprises:
- a flange (7) which comprises means (37, 38) for removably blocking said screw in rotation relative to said ring.

2. The bridge according to claim 1, **characterised in that** the means (37, 38) for blocking the flange comprise means (37) for engaging the flange on the head (12) of the screw.

3. The bridge according to claim 2, **characterised in that** the screw is a face screw, preferably a hexagonal head screw (12), the means for engaging (37) the flange on the screw head (12) comprising a stop ring (31), preferably poly-lobed, provided to be engaged with the faces of said head (12).

4. The bridge according to one of claims 1 to 3, **characterised in that** the means (37, 38) for blocking the flange (7) comprise stops (38) provided to be rotatably engaged on either side of the bracket (4).

5. The bridge according to one of claims 1 to 4, **characterised in that** it further comprises means (9, 17) for holding the flange (7) in axial engagement on the screw.

6. The bridge according to claim 5, **characterised in that** the means (9, 17) for holding the flange in axial engagement, comprise an extension (17) provided to extend axially beyond the flange from the screw head (12) and a pin (8) provided to be transversely removably engaged with said extension.
